# EUROPÄISCHE PATENTSCHRIFT

(11) **EP 1 251 092 B1**
(45) Veröffentlichungstag und Bekanntmachung des Hinweises auf die Patenterteilung: **27.07.2005**
(21) Anmeldenummer: 02005826.9
(22) Anmeldetag: 14.03.2002
(51) Int. Cl.: B65H 19/18, B65H 20/08, B65H 43/00, B65H 21/00

(54) **Materialführungssystem für Spleissmaschinen**
Material guiding system for splicing machines
Système à guider du matériau pour de machines de raccordement

(30) Priorität: 21.04.2001 DE 10119508
(43) Veröffentlichungstag der Anmeldung: 23.10.2002
(73) Patentinhaber: Karl Eugen Fischer GmbH Maschinenfabrik, D-96224 Burgkunstadt (DE)
(72) Erfinder: Hoffmann, Bernd, 96224 Burgkunstadt (DE)
(74) Vertreter: Blaumeier, Jörg

(56) Entgegenhaltungen:
- EP-A- 0 618 064
- DE-B- 1 245 111
- US-A- 3 743 155

## Beschreibung

Die Erfindung bezieht sich auf ein Materialführungssystem, insbesondere für Spleißmaschinen, mit einem Bandtransportsystem, auf dem ein Cordbandstreifen zu einer vorgegebenen Spleißlinie gefördert wird.

Beim Fördern der häufig sehr dünnen und weichen Cordbandstreifen (siehe EP 0618064) ergibt sich die Schwierigkeit, dass durch Unregelmäßigkeiten bei der Übergabe oder beim Bandlauf die Materialkanten der Cordbandstreifen verbogen werden. Dadurch ergibt sich beim Stumpfspleißen kein Aneinanderstoßen der Kanten zweier Streifen und bei einem überlappenden Spleißen keine gleichmäßige Überlappung, sodass ein zufriedenstellender Spleißvorgang nicht möglich ist.

Der Erfindung liegt daher die Aufgabe zugrunde, ein Materialführungssystem zu schaffen, welches es gestattet, Cordbandstreifen exakt mit ihren Materialkanten auf die Spleißlinie auszurichten, selbst wenn sie verbogen auf dem Transportsystem ankommen.

Zur Lösung dieser Aufgabe ist erfindungsgemäß vorgesehen, dass das Bandtransportsystem aus einer Mehrzahl einzeln steuerbaren Transportbändern oder Transportbandgruppen besteht, deren Antrieb von der Vorder- und/oder Nachlaufkante des Cordbandstreifens steuerbar ist, insbesondere dergestalt, dass jedem Transportband bzw. jeder Transportbandgruppe ein auf der vorgegebenen Spleißlinie oder einer dazu parallelen in Transportrichtung vor der Spleißlinie angeordneten Linie liegender Sensor zum Ansteuern der jeweiligen Transportbandantriebseinrichtung zugeordnet ist.

Durch die erfindungsgemäße Ausgestaltung ist es möglich, den Antrieb des Transportbandes, auf dem der am weitesten vorauseilende Bereich der Vor- oder Nachlaufkante angeordnet ist, beim Erreichen des jeweiligen Sensors anzuhalten, während die anderen noch weiterlaufen, bis auch die auf innenliegenden Abschnitten den jeweiligen Sensor erreicht haben, um auf diese Art und Weise ein Ausrichten der Kanten des Cordbandstreifens zu erreichen.

Neben einem Anhalten des jeweiligen Transportbandes oder der Transportbandgruppe beim Erreichen des jeweiligen Sensors ist es auch möglich, dass eine abgebremste Bewegung entweder bis zu einem zweiten Sensor oder über eine vorgegebene einstellbare Nachlaufstrecke stattfindet, um auf diese Art und Weise eine größere oder kleinere Überlappung zu erzielen.

Dabei liegt es auch im Rahmen der Erfindung, dass mit dem Anhalten eines Transportbandes oder einer Transportbandgruppe über einen Pressstempel oder dergleichen eine Fixierung des aufliegenden Abschnitts des Cordbandstreifens erfolgt, sodass sichergestellt ist, dass dieser Cordbandstreifen nicht durch die sich weiterbewegenden Nachbarabschnitte noch teilweise mit verschoben wird, obgleich das Transportband, auf dem dieser Cordbandstreifenabschnitt aufliegt, bereits angehalten worden ist.

Ersichtlich ist das erfindungsgemäße Materialführungssystem nicht auf Spleißmaschinen beschränkt, bei denen die Spleißkante senkrecht zur Transportrichtung des Bandtransportsystems liegt, sondern es könnte selbstverständlich auch eine zur Bandtransportachse schräg liegende Spleißlinie vorgesehen sein und auch bei dieser mithilfe der erfindungsgemäßen Maßnahme ein Ausrichten der Vorlauf- und Nachlaufkanten der Cordbandstreifen erfolgen.

Die Sensoren liegen zwischen dem Ende des Zuführbandtransportsystems und dem Abführbandtransportsystem unmittelbar im Bereich der Spleißeinrichtung, wobei zwischen den beiden Transportbändern in an sich bekannter Weise eine schmale Auflaufleiste vorgesehen sein kann, um ein überlappendes Spleißens zu gewährleisten. Die Sensoren sind unter dieser abkippbar ausgestalteten Auflaufleiste angeordnet, wobei das Abkippen dazu dient, die über die Sensoren ausgerichtete Nachlaufkante des auslaufenden Bandes nach unten wegzubewegen, damit die Vorderkante des nächsten Cordbandstreifens eine bestimmte Überlappungsstrecke darüber verfahren werden kann. Anschließend wird der abgekippte Spleißtisch wieder angehoben und es erfolgt in an sich bekannter Weise das Verspleißen.

Mit besonderem Vorteil kann in Ausgestaltung der Erfindung vorgesehen sein, dass die Transportbänder bzw. Transportbandgruppen nicht unmittelbar am Ort des Sensors anhalten, sondern erst einige Millimeter hinter ihm. Dies hat den Vorteil, dass mit einer Sensorlinie sowohl die Nachlaufkante des auslaufenden Cordbandstreifens als auch die Vorlaufkante des einlaufenden Cordbandstreifens ausgerichtet werden kann. Die Nachlaufkante liegt nämlich dann bei einer solchen Verzögerung in Bandförderrichtung gesehen etwas hinter den dann wieder frei liegenden Sensoren, sodass die gleichen Sensoren die Steuerung der Vorderkante des einlaufenden Cordbandstreifens übernehmen können. Die Art und Weise, wie weit der einlaufende Cordbandstreifen über die Sensorlinie noch weiter verfahren wird, hängt davon ab, ob stumpf gespleißt werden soll oder überlappend.

Weitere Vorteile, Merkmale und Einzelheiten der Erfindung ergeben sich aus der nachfolgenden Beschreibung eines Ausführungsbeispieles sowie anhand der Zeichnung, in der schematisiert die Funktionsweise des erfindungsgemäßen Materialführungssystems erläutert wird. Dabei zeigen:
- Fig. 1: Eine schematische Seitenansicht des Bandtransportsystems im Bereich der Spleißlinie, wobei die eigentliche Spleißvorrichtung und ein etwa vorgesehener Spleißtisch aus Übersichtlichkeitsgründen weggelassen worden sind. Dargestellt sind nur diejenigen Bauteile, die für die erfindungsgemäße Transportbandsteuerung zum Ausrichten der Cordbandstreifenkanten erforderlich sind.
- Fig. 2: Eine Aufsicht auf die Anordnung nach Fig.1 mit einem zuzuführenden Cordbandstreifen mit welliger Vorderkante,
- Fig. 3: eine der Fig. 2 entsprechende Aufsicht in der Position, in der das vorlaufende Ende der gewellten Vorderkante des Cordbandstreifens den zugehörigen Sensor erreicht hat,
- Fig. 4: eine weitere Zwischenstufe, in der auch eine zweite Bandeinheit gestoppt worden ist,
- Fig. 5: die Endposition, in der durch die einzeln anhaltbaren Bandeinheiten die Vorderkante des Cordbandstreifens gerade ausgerichtet ist,
- Fig. 6 und 7: den Fig. 3 und 5 entsprechende Aufsichten während des Ausrichtens der Nachlaufkante des Cordbandstreifens und
- Fig. 8: eine schematische Seitenansicht gemäß Fig. 1 bei einem ungeteilten Abtransportband.

Das gezeigte Bandtransportsystem umfasst ein Zuführtransportsystem 1 und in kurzem Abstand dahinter angeordnetes Abführtransportsystem 2. Zwischen beiden befindet sich die nicht gezeigte Spleißvorrichtung. Gezeigt ist in den Figuren ein Ausführungsbeispiel, bei dem die Spleißlinie senkrecht zur Förderrichtung 3 der Transportsysteme verläuft. Das erfindungsgemäße Materialführungssystem eignet sich aber auch für Cordbandstreifen mit schräg zur Förderrichtung 3 angeordneten Vor- und Nachlaufkanten.

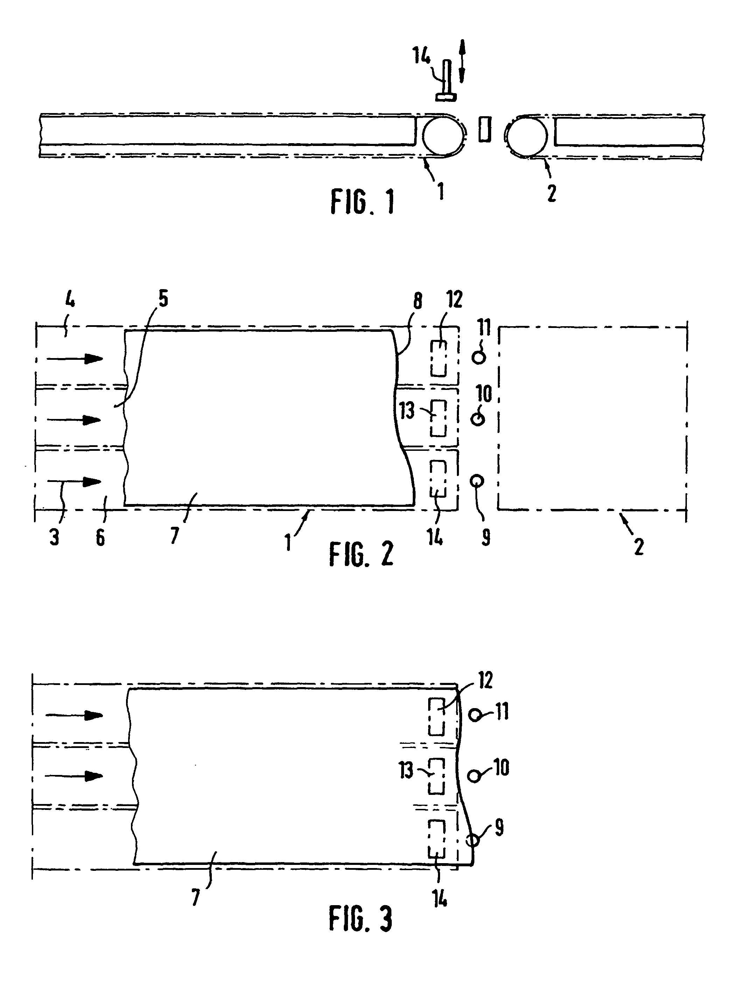

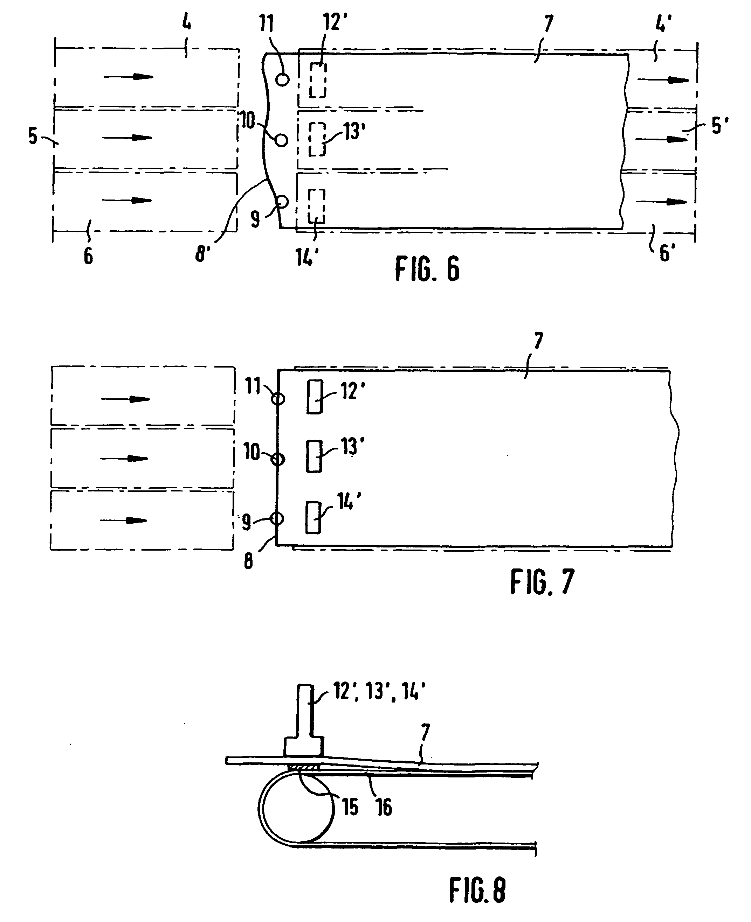

Die Bandtransportsysteme 1 und 2 in den Fig. 1 bis 7 bestehen aus einer Mehrzahl von Transportbändern, die einzeln oder in Gruppen steuerbar sind. Im dargestellten Ausführungsbeispiel sind drei Transportbandgruppen 4, 5 und 6 vorgesehen, bei denen es sich entweder um einzelne Bänder oder um eine Mehrzahl von antriebsmäßig miteinander gekoppelten Bändern handeln kann. Auf den drei Transportbandgruppen 4 bis 6 des Zuführ- Bandtransportsystems 1 liegt ein Cordbandstreifen 7 auf, dessen Vorderkante 8, wie man in den Fig. 2 und 3 erkennen kann, nicht senkrecht zur Bandlaufrichtung 3 und damit parallel zur Spleißkante verläuft, sondern gewellt ist. Um ein Ausrichten dieser gewellten Vorlaufkante 8 zu ermöglichen, die durch Spannungen im Material immer wieder hervorgerufen werden kann und damit dann auch tatsächlich ein befriedigendes Spleißen dieses einlaufenden Cordbandstreifens mit einem erst in Fig. 7 gezeigten, bereits auf dem Abführ- Bandtransportsystem 2 liegenden Cordbandstreifens zu erzielen, sind die Transportbandgruppen über in der Spleißlinie 15 oder einer dazu parallelen Linie liegende Sensoren 9, 10 und 11 getrennt steuerbar.

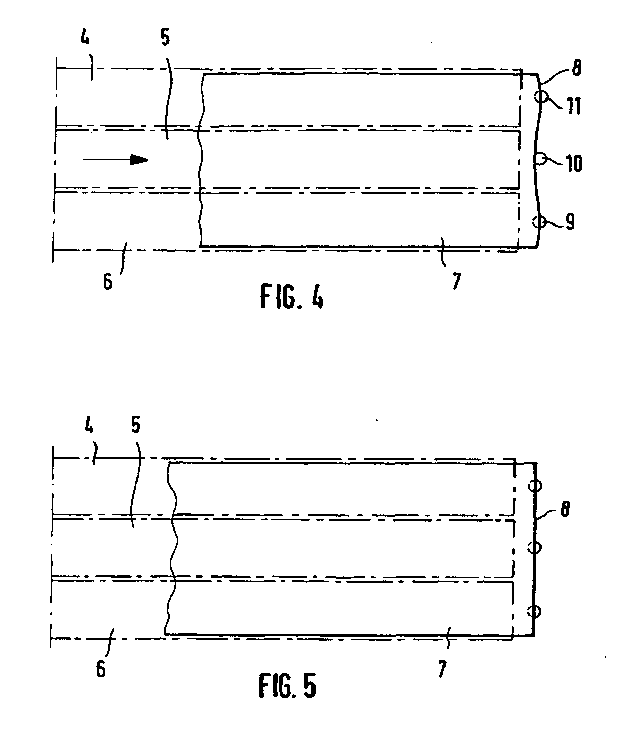

Sobald die Vorderkante des vorlaufenden Abschnitts der Vorlaufkante 8 den zugehörigen Sensor 9 erreicht, veranlasst dieser ein Anhalten des Antriebssystems für die Transportbandgruppe 6, sodass das untere Drittel des Cordbandstreifens 7 nicht mehr weitergefördert wird. Die anderen beiden Transportbandgruppen 5 und 4 laufen weiter bis, wie in Fig. 4 dargestellt ist, im oberen Drittel die Vorlaufkante 8 den zugehörigen Sensor 11 erreicht hat und dann die Transportbandgruppe 4 angehalten wird. Anschließend läuft die mittlere Transportbandgruppe 5 noch ein kurzes Stück weiter, bis schließlich eine Ausrichtung zu einer geraden Vorlaufkante 8 erzielt ist, wie sie in Fig. 5 dargestellt ist.

Bei 12, 13 und 14 sind Pressstempel angedeutet, die beim Anhalten der unter Ihnen liegenden Transportbandgruppe automatisch betätigt werden, um den darauf aufliegenden Abschnitt des Cordbandstreifens zu fixieren, sodass er nicht durch die weiterlaufenden Nachbarbänder teilweise über die stillstehende Transportbandgruppe mit verschleppt werden kann, wodurch das gewünschte exakte Ausrichten gefährdet wäre. Anstelle des Anhaltens und Blockierens des Cordbandstreifenabschnitts durch einen solchen Pressstempel könnte bei Stahlcordbandstreifen auch vorgesehen sein, dass in den Transportbändern Magnete angeordnet sind, die für eine solche Verrutschsicherung sorgen. Im Falle von Textilcordbändern wäre eine Bremse denkbar, bei der - im Bereich vor der Spleißlinie-Saugleisten unterhalb der gelochten Transportbänder angeordnet sind, die in gleicher Weise für ein festes Haften des jeweils aufliegenden Cordbandstreifenabschnitts auf dem jeweiligen Transportband sorgen und damit bei dessen Anhalten ein Weiterrutschen gemeinsam mit den benachbarten, noch durch die unter ihnen angeordneten Transportbänder bewegten, Cordbandstreifenabschnitte verhindern.

Die Fig. 6 und 7 zeigen das Ausrichten der Nachlaufkante 8' eines angespleißten und um seine Länge auf der Abtransportbandgruppe weitertransportierter Cordbandstreifens 7. Die Funktionsweise ist entsprechend wie beim Ausrichten der Vorlaufkante in den Fig. 1 bis 5. Die verbogenen Nachlaufkante 8' wird mittels der Sensoren 9, 10 und 11 und der Pressstempel 12', 13' und 14' in gleicher Weise ausgerichtet, wie dies weiter oben im Zusammenhang mit der Vorlaufkante 8 beschrieben worden ist. Auch in diesem Fall könnten anstelle der Pressstempel 12', 13', 14' entweder Magnete in den Transportbandgruppen 4', 5', 6' oder Saugleisten unter gelochten Transportbandgruppen zum Fixieren des Cordbandstreifens 7 mit der jeweils angehaltenen Transportbandgruppe 4', 5', 6' vorgesehen sein. Im gezeigten Ausführungsbeispiel wird zunächst die Transportbandgruppe 6' angehalten, anschließend die Transportbandgruppe 5' und schließlich die Transportbandgruppe 4', um die exakte Ausrichtung der Nachlaufkante 8' gemäß Fig. 7 zu erzielen.

Die Erfindung ist nicht auf das dargestellte Ausführungsbeispiel beschränkt. Neben einer schräg zur Bandlaufrichtung 3 angeordneten Spleißlinie könnte zum Einen vorgesehen sein, dass beim Erreichen eines Sensors die jeweilige Transportbandgruppe nicht schlagartig angehalten wird, sondern zunächst verzögert wird und erst nach einer vorgegebenen Strecke endgültig zum Anhalten gebracht wird, um ein langsameres, weicheres Ausrichten der Vorderkante 8 zu erzielen.

Darüber hinaus könnte auch vorgesehen sein, dass die Transportbandgruppen erst angehalten werden, wenn die Kante 8 des Cordbandstreifens einige Millimeter weiter gelaufen ist, als die Position des jeweiligen Sensors. Auf diese Art und Weise liegt dann die nicht gezeigte Nachlaufkante des auslaufenden Cordbandstreifens auf dem Bandtransportsystem 2 rechts neben der Linie der Sensoren 9, 10 und 11, sodass genau die gleichen Sensoren auch zum Ausrichten der Vorderkante 8 des zugeführten Cordbandstreifens 7 verwendet werden können und zwar unabhängig davon, ob ein stumpfes oder ein überlappendes Spleißen erfolgen soll.

Darüber hinaus liegt es auch noch im Rahmen der Erfindung, anstelle einer geteilten Abtransportbandgruppe mit Transportbändern oder Transportbandgruppen 4', 5', 6' ein gemeinsames, über die ganze Breite durchgehendes Abtransportband vorzusehen und zwar in Verbindung mit den Pressstempeln 12', 13' und 14'. Bei dieser Lösung ist zusätzlich ein ortsfestes Blech oder eine Leiste unter den Pressstempeln, und zwar zwischen dem Cordbandstreifen 7 und dem Abtransportband vorgesehen. Wenn nun einer der Stempel 12', 13', 14' von oben auf den Cordbandstreifen 7 abgesenkt wird, so verklemmt er ihn gegen den Blechstreifen 15 in Fig. 8. Dieser Abschnitt des Cordbandstreifens 7 wird also im Gegensatz zu dem Nachbarstreifen, wo die Stempel noch nicht abgesenkt sind, angehalten, gleichzeitig kann aber das Transportband unter dem Blechstreifen 15 auch im geklemmten Bereich des Cordbandstreifens 7 sich weiter bewegen. Die Reibung zwischen dem Blechstreifen 15 und dem Transportband ist genügend klein. Dies funktioniert nur am Abtransportband, also zum Ausrichten des Nachlaufkante 8' und nicht zum Ausrichten der Vorlaufkante 8 des Cordbandstreifens, da das Transportband auch unter dem festgehaltenen Bereich des Cordbandstreifens weggleiten kann. Bei der Vorlaufkante ergäbe sich ein Zusammenschieben des Bandmaterials und eine Verformung durch Stauchen.

## Patentansprüche

1. Materialführungssystem, insbesondere für Spleißmaschinen, mit einem Bandtransportsystem, auf dem ein Cordbandstreifen zu einer vorgegebenen Spleißlinie gefördert wird, **dadurch gekennzeichnet, dass** das Bandtransportsystem (1, 2) aus einer Mehrzahl einzeln steuerbarer Transportbänder oder Transportbandgruppen (4, 5, 6) besteht, deren Antrieb von der Vor- und/oder Nachlaufkante (8) des Cordbandstreifens (7) steuerbar ist.

2. Materialführungssystem nach Anspruch 1, **dadurch gekennzeichnet, dass** jedem Transportband bzw. jeder Transportbandgruppe (4, 5, 6) ein auf der vorgegebenen Spleißlinie oder einer dazu parallelen in Transportrichtung vor der Spleißlinie angeordneten Linie liegender Sensor (9, 10, 11) zum Ansteuern der jeweiligen Transportband-Antriebseinrichtung zugeordnet ist.

3. Materialführungssystem nach Anspruch 1 oder 2, **dadurch gekennzeichnet, dass** beim Ansprechen eines Sensors (9, 10, 11) ein Anhalten oder Abbremsen der jeweiligen Transportband-Antriebseinrichtung erfolgt.

4. Materialführungssystem nach einem der Ansprüche 1 bis 3, **dadurch gekennzeichnet, dass** mit dem Anhalten eines Transportbandes oder einer Transportbandgruppe (4, 5, 6) über eine Arretiervorrichtung (12, 13, 14) eine Fixierung des aufliegenden Abschnitts des Cordbandstreifens (7) erfolgt.

5. Materialführungssystem nach Anspruch 3, **dadurch gekennzeichnet, dass** die Arretiervorrichtung Pressstempel (12, 13, 14; 12', 13', 14') umfasst.

6. Materialführungssystem nach Anspruch 4, **dadurch gekennzeichnet, dass** zur Führung von Stahl-Cordbandstreifen die Transportbänder mit eingebauten Magneten versehen sind.

7. Materialführungssystem nach Anspruch 4, **dadurch gekennzeichnet, dass** zur Führung von Textil-Cordbandstreifen die Arretiervorrichtung durch unter den Transportbandgruppen (4, 5, 6; 4', 5', 6') angeordnete Saugleisten in Verbindung mit Perforierungen der Transportbänder ausgebildet ist.

8. Materialführungssystem nach einem der Ansprüche 1 bis 7, **dadurch gekennzeichnet, dass** die Transportbänder oder Transportbandgruppen (4, 5, 6) verzögert angehalten werden, derart, dass die ausgerichtete Vor- oder Nachlaufkante (8) der Cordbandstreifen (7) parallel neben der Linie der Sensoren (9, 10, 11) liegt.

9. Materialführungssystem nach einem der Ansprüche 1 bis 8, **dadurch gekennzeichnet, dass** zum Abtransport der Cordbandstreifen (7) ein ungeteiltes Transportband in Verbindung mit Arretier-Pressstempeln (12', 13', 14') verwendet wird, wobei zwischen dem Cordbandstreifen (7) und dem Transportband eine, ein Gleiten des darunter liegenden Transportbandes auch im geklemmten Zustand ermöglichende Schiene, bzw. ein Blechstreifen (15) vorgesehen ist.

## Claims

1. Material guiding system, in particular for splicing machines, having a belt-type conveyor system, on which a corded strip is conveyed to a specified splicing line, **characterised in that** the belt-type conveyor system (1, 2) consists of a plurality of individually controllable conveyor belts or conveyor belt groups (4, 5, 6), whose drive is controllable by the leading and/or trailing edge (8) of the corded strip (7).

2. Material guiding system according to claim 1, **characterised in that** each conveyor belt or each conveyor belt group (4, 5, 6) is allocated a sensor (9, 10, 11) lying on the specified splicing line or a line disposed parallel thereto and lying upstream of the splicing line in the conveying direction in order to trigger the respective conveyor belt drive direction.

3. Material guiding system according to claim 1 or 2, **characterised in that** upon the response of a sensor (9, 10, 11) the respective conveyor belt drive device is stopped or braked.

4. Material guiding system according to one of claims 1 to 3, **characterised in that** upon stopping of a conveyor belt or a conveyor belt group (4, 5, 6), the section of the corded strip (7) lying thereon is fixed via a locking device (12, 13, 14).

5. Material guiding system according to claim 3, **characterised in that** the locking device comprises rams (12, 13, 14; 12', 13', 14').

6. Material guiding system according to claim 4, **characterised in that** for guiding steel corded strips, the conveyor belts are provided with fitted magnets.

7. Material guiding system according to claim 4, **characterised in that** for guiding textile corded strips the locking device is formed by suction strips disposed under the conveyor belt groups (4, 5, 6; 4', 5', 6') in combination with perforations in the conveyor belts.

8. Material guiding system according to one of claims 1 to 7, **characterised in that** the conveyor belts or conveyor belt groups (4, 5, 6) are stopped in a delayed manner, such that the aligned leading or trailing edge (8) of the corded strip (7) lies parallel and adjacent to the line of the sensors (9, 10, 11).

9. Material guiding system according to one of claims 1 to 8, **characterised in that** for discharging the corded strips (7), an undivided conveyor belt is used in combination with locking rams (12', 13', 14'), in which case between the corded strip (7) and the conveyor belt a rail or sheet-metal strip (15) is provided which permits the conveyor belt lying below to slide, even in the clamped state.

## Revendications

1. Système de guidage de matériau, en particulier pour machines de raccordement, du type comportant un système à bandes transporteuses, sur lesquelles un tapis continu de filaments est amené à une ligne de raccordement prédéterminée, **caractérisé en ce que** le système à bandes transporteuses (1, 2) se compose d'une pluralité de bandes transporteuses ou de groupes de bandes transporteuses (4, 5, 6), dont l'entraînement peut être commandé depuis le bord menant et/ou le bord mené (8) du tapis continu de filaments (7).

2. Système de guidage de matériau selon la revendication 1, **caractérisé en ce que**, à chaque bande transporteuse ou groupe de bandes transporteuses (4, 5, 6) est associé un détecteur (9, 10, 11), disposé sur la ligne de raccordement prédéterminée ou sur une ligne située devant la ligne de raccordement dans la direction du transport, et parallèlement à celle-ci, en vue de la commande du système d'entraînement de bande transporteuse concerné.

3. Système de guidage de matériau selon l'une des revendications 1 ou 2, **caractérisé en ce que**, lors de l'intervention d'un détecteur (9, 10, 11), il se produit une pause ou un freinage du système d'entraînement de bande transporteuse concerné.

4. Système de guidage de matériau selon l'une quelconque des revendications 1 à 3, **caractérisé en ce que**, avec la pause d'une bande transporteuse ou d'un groupe de bandes transporteuses (4, 5, 6), il se produit une fixation, au moyen d'un dispositif d'arrêt (12, 13, 14), de la section du tapis continu de filaments (7) situé dessus.

5. Système de guidage de matériau selon la revendication 3, **caractérisé en ce que** le dispositif d'arrêt comporte un tampon compresseur (12, 13, 14, 12', 13', 14').

6. Système de guidage de matériau selon la revendication 4, **caractérisé en ce que**, en vue du guidage de tapis continus en fils d'acier, les bandes transporteuses sont prévues avec des aimants incorporés.

7. Système de guidage de matériau selon la revendication 4, **caractérisé en ce que**, en vue du guidage de tapis continus en filaments textiles, le dispositif d'arrêt est constitué par des conduites d'aspiration disposées transversalement aux groupes de bandes transporteuses (4, 5, 6, 4', 5', 6'), en liaison avec des perforations des bandes transporteuses.

8. Système de guidage de matériau selon l'une quelconque des revendications 1 à 7, **caractérisé en ce que** les bandes transporteuses ou les groupes de bandes transporteuses (4, 5, 6) sont maintenues ralenties de manière telle que le bord menant ou le bord mené (8) aligné du tapis continu de filaments (7) est situé parallèlement à la ligne de détecteurs (9, 10, 11) et à côté de celle-ci.

9. Système de guidage de matériau selon l'une quelconque des revendications 1 à 8, **caractérisé en ce que**, pour l'évacuation du tapis continu de filaments (7), on utilise une bande transporteuse non divisée en liaison avec un tampon compresseur d'arrêt (12', 13', 14'), entre le tapis continu de filaments (7) et la bande transporteuse étant prévu un rail ou une bande de tôle (15) rendant possible un glissement de la bande transporteuse située au-dessous, même à l'état collé.
